# EUROPEAN PATENT APPLICATION

(11) **EP 4 601 213 A1**
(43) Date of publication of application: **13.08.2025**
(21) Application number: 24156374.1
(22) Date of filing: 07.02.2024
(51) Int. Cl.: H04B 7/06, H04W 74/0833

(54) **APPARATUS, METHOD AND COMPUTER PROGRAM**

(71) Applicant: Nokia Technologies Oy, 02610 Espoo (FI)
(72) Inventor: KOSKELA, Timo, 90670 Oulu (FI); HAKOLA, Sami-Jukka, 90450 Kempele (FI); KARJALAINEN, Juha Pekka, 88600 Sotkamo (FI); KAIKKONEN, Jorma Johannes, 90800 Oulu (FI); CAPORAL DEL BARRIO, Samantha, 9000 Aalborg (DK)
(74) Representative: Page White Farrer

(57) **Abstract**

There is provided an apparatus comprising means for providing, from a user equipment to a network node during a random access procedure, information relating to a first reference signal and information relating to a second reference signal for performing at least one of simultaneous downlink reception or simultaneous uplink transmission at the user equipment; and means for receiving an indication from the network node to confirm support of the at least one of simultaneous downlink reception or simultaneous uplink transmission at the user equipment.

## Description

### Field

The present application relates to a method, apparatus, system and computer program and in particular but not exclusively to simultaneous transmission (Tx) and reception (Rx) indication in initial access.

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is Universal Mobile Telecommunications System (UMTS) Terrestrial Radio Access Network (UTRAN) (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). Other examples of communication systems include 5G-Advanced (NR Rel-18 and beyond) and 6G.

### Summary

In a first aspect there is provided an apparatus comprising means for providing, from a user equipment to a network node during a random access procedure, information relating to a first reference signal and information relating to a second reference signal for performing at least one of simultaneous downlink reception or simultaneous uplink transmission at the user equipment and means for receiving an indication from the network node to confirm support of the at least one of simultaneous downlink reception or simultaneous uplink transmission at the user equipment.

The apparatus may comprise means for, in response to receiving the indication to confirm support, performing the at least one of simultaneous downlink reception or simultaneous uplink transmission at the user equipment.

Information relating to a first reference signal and information relating to a second reference signal may comprise at least one of: an indication of reference signal resources suitable for both simultaneous downlink reception and transmission; reference signal resources suitable for simultaneous uplink transmission; reference signal resources suitable for uplink transmission or reference signal resources suitable for downlink and uplink transmission.

The apparatus may comprise means for providing the information relating to the first reference signal and the information relating to the second reference signal in at least one message during the random access procedure, wherein the message includes at least one of: a random access preamble, a message 3 of the random access procedure or a message A of the random access.

The apparatus may comprise means for providing the information relating to the first reference signal in a random access preamble and the information relating to the second reference signal in message 3 of the random access procedure or message A of the random access.

The information relating to the second reference signal comprises an indication of a time location index of the second reference signal or an indication of logical index of the second reference signal or a resource indicator of the second reference signal.

The apparatus may comprise means for obtaining access information from the network node in system information or dedicated signalling and means for determining to provide the information relating to the first reference signal and the information relating to the second reference signal to the network node based on the obtained access information.

The access information may comprise information indicating whether the network node allows or supports provision of additional information during access procedure.

The apparatus may comprise means for selecting the first reference signal based on a signal measurement condition.

The apparatus may comprise means for selecting the second reference signal based on the signal measurement condition and an offset from the signal measurement condition.

The apparatus may comprise means for selecting the second reference signal based on the suitability for of at least one of receiving simultaneously or transmitting simultaneously, reference signal resources which are suitable for simultaneous uplink transmission, reference signal resources for uplink transmission, reference signal resources for downlink and uplink using the indicated reference signal resource as spatial relation for the uplink transmission and means for indicating the suitability to the network.

The apparatus may comprise means for monitoring for the indication to confirm support using at least one of the first reference signal and the second reference signal as a reference. The indication to confirm support may be comprised in a downlink control information message or in a downlink control message in random access response on both reference signals used as reference for receiving the indication.

The first reference signal and the second reference signal may each comprise at least one of a synchronization signal, demodulation reference signal, a channel state information reference signal or physical broadcast channel block.

A user equipment may comprise the apparatus of the first aspect.

In a second aspect there is provided an apparatus comprising means for receiving, from a user equipment at the network node during a random access procedure, information relating to a first reference signal and information relating to a second reference signal for performing at least one of simultaneous downlink reception or simultaneous uplink transmission at the user equipment and means for providing an indication from the network node to the user equipment to confirm support of the at least one of simultaneous downlink reception or simultaneous uplink transmission at the user equipment.

A network node may comprise the apparatus of the second aspect.

In a third aspect there is provided a method comprising providing, from a user equipment to a network node during a random access procedure, information relating to a first reference signal and information relating to a second reference signal for performing at least one of simultaneous downlink reception or simultaneous uplink transmission at the user equipment; and receiving an indication from the network node to confirm support of the at least one of simultaneous downlink reception or simultaneous uplink transmission at the user equipment.

The method may comprise, in response to receiving the indication to confirm support, performing the at least one of simultaneous downlink reception or simultaneous uplink transmission at the user equipment.

Information relating to a first reference signal and information relating to a second reference signal may comprise at least one of: an indication of reference signal resources suitable for both simultaneous downlink reception and transmission; reference signal resources suitable for simultaneous uplink transmission; reference signal resources suitable for uplink transmission or reference signal resources suitable for downlink and uplink transmission.

The method may comprise providing the information relating to the first reference signal and the information relating to the second reference signal in at least one message during the random access procedure, wherein the message includes at least one of: a random access preamble, a message 3 of the random access procedure or a message A of the random access procedure.

The method may comprise providing the information relating to the first reference signal in a random access preamble and the information relating to the second reference signal in message 3 of the random access procedure or message A of the random access procedure.

The information relating to the second reference signal comprises an indication of a time location index of the second reference signal or an indication of logical index of the second reference signal or a resource indicator of the second reference signal.

The method may comprise obtaining access information from the network node in system information or dedicated signalling and determining to provide the information relating to the first reference signal and the information relating to the second reference signal to the network node based on the obtained access information.

The access information may comprise information indicating whether the network node allows or supports provision of additional information during access procedure.

The method may comprise selecting the first reference signal based on a signal measurement condition.

The method may comprise selecting the second reference signal based on the signal measurement condition and an offset from the signal measurement condition.

The method my comprise selecting the second reference signal based on the suitability for of at least one of receiving simultaneously or transmitting simultaneously, reference signal resources which are suitable for simultaneous uplink transmission, reference signal resources for uplink transmission, reference signal resources for downlink and uplink using the indicated reference signal resource as spatial relation for the uplink transmission and means for indicating the suitability to the network.

The method may comprise monitoring for the indication to confirm support using at least one of the first reference signal and the second reference signal as a reference.

The indication to confirm support may be comprised in a downlink control information message or in a downlink control message in random access response on both reference signals used as reference for receiving the indication.

The first reference signal and the second reference signal may each comprise at least one of a synchronization signal, demodulation reference signal, a channel state information reference signal or physical broadcast channel block.

The method of the third aspect may be performed at a user equipment.

In a fourth aspect there is provided a method comprising receiving, from a user equipment at a network node during a random access procedure, information relating to a first reference signal and information relating to a second reference signal for performing at least one of simultaneous downlink reception or simultaneous uplink transmission at the user equipment and providing an indication from the network node to the user equipment to confirm support of the at least one of simultaneous downlink reception or simultaneous uplink transmission at the user equipment.

The method of the fourth aspect may be performed at an access node.

In a fifth aspect there is provided an apparatus comprising at least one processor, and at least one memory storing instructions which, when executed by the processor, cause the apparatus at least to provide, from the user equipment to a network node during a random access procedure, information relating to a first reference signal and information relating to a second reference signal for performing at least one of simultaneous downlink reception or simultaneous uplink transmission at the user equipment and receive an indication from the network node to confirm support of the at least one of simultaneous downlink reception or simultaneous uplink transmission at the user equipment.

The apparatus may be caused to, in response to receiving the indication to confirm support, perform the at least one of simultaneous downlink reception or simultaneous uplink transmission at the user equipment.

Information relating to a first reference signal and information relating to a second reference signal may comprise at least one of: an indication of reference signal resources suitable for both simultaneous downlink reception and transmission; reference signal resources suitable for simultaneous uplink transmission; reference signal resources suitable for uplink transmission or reference signal resources suitable for downlink and uplink transmission.

The apparatus may be caused to provide the information relating to the first reference signal and the information relating to the second reference signal in at least one message during the random access procedure, wherein the message includes at least one of: a random access preamble, a message 3 of the random access procedure or a message A of the random access procedure.

The apparatus may be caused to provide the information relating to the first reference signal in a random access preamble and the information relating to the second reference signal in message 3 of the random access procedure or message A of the random access procedure.

The information relating to the second reference signal comprises an indication of a time location index of the second reference signal or an indication of logical index of the second reference signal or a resource indicator of the second reference signal.

The apparatus may be caused to obtain access information from the network node in system information or dedicated signalling and determine to provide the information relating to the first reference signal and the information relating to the second reference signal to the network node based on the obtained access information.

The access information may comprise information indicating whether the network node allows or supports provision of additional information during access procedure.

The apparatus may be caused to select the first reference signal based on a signal measurement condition.

The apparatus may be caused to select the second reference signal based on the signal measurement condition and an offset from the signal measurement condition.

The apparatus may be caused to select the second reference signal based on the suitability for of at least one of receiving simultaneously or transmitting simultaneously, reference signal resources which are suitable for simultaneous uplink transmission, reference signal resources for uplink transmission, reference signal resources for downlink and uplink using the indicated reference signal resource as spatial relation for the uplink transmission and means for indicating the suitability to the network.

The apparatus may comprise means for monitoring for the indication to confirm support using at least one of the first reference signal and the second reference signal as a reference.

The indication to confirm support may be comprised in a downlink control information message or in a downlink control message in random access response on both reference signals used as reference for receiving the indication.

The first reference signal and the second reference signal may each comprise at least one of a synchronization signal, demodulation reference signal, a channel state information reference signal or physical broadcast channel block.

A user equipment may comprise the apparatus of the fifth aspect.

In a sixth aspect there is provided an apparatus comprising at least one processor, and at least one memory storing instructions which, when executed by the processor, cause the apparatus at least to receive, from a user equipment at the network node during a random access procedure, information relating to a first reference signal and information relating to a second reference signal for performing at least one of simultaneous downlink reception or simultaneous uplink transmission at the user equipment and provide an indication from the network node to the user equipment to confirm support of the at least one of simultaneous downlink reception or simultaneous uplink transmission at the user equipment.

An access node may comprise the apparatus of the sixth aspect.

In a seventh aspect there is provided a computer readable medium comprising instructions which, when executed by an apparatus, cause the apparatus to perform at least the following providing, from a user equipment to a network node during a random access procedure, information relating to a first reference signal and information relating to a second reference signal for performing at least one of simultaneous downlink reception or simultaneous uplink transmission at the user equipment and receiving an indication from the network node to confirm support of the at least one of simultaneous downlink reception or simultaneous uplink transmission at the user equipment.

The apparatus may be caused to perform, in response to receiving the indication to confirm support, performing the at least one of simultaneous downlink reception or simultaneous uplink transmission at the user equipment.

Information relating to a first reference signal and information relating to a second reference signal may comprise at least one of: an indication of reference signal resources suitable for both simultaneous downlink reception and transmission; reference signal resources suitable for simultaneous uplink transmission; reference signal resources suitable for uplink transmission or reference signal resources suitable for downlink and uplink transmission.

The apparatus may be caused to perform providing the information relating to the first reference signal and the information relating to the second reference signal in at least one message during the random access procedure, wherein the message includes at least one of: a random access preamble, a message 3 of the random access procedure or a message A.

The apparatus may be caused to perform providing the information relating to the first reference signal in a random access preamble and the information relating to the second reference signal in message 3 of the random access procedure or message A of the random access procedure.

The information relating to the second reference signal comprises an indication of a time location index of the second reference signal or an indication of logical index of the second reference signal or a resource indicator of the second reference signal.

The apparatus may be caused to perform obtaining access information from the network node in system information or dedicated signaling and determining to provide the information relating to the first reference signal and the information relating to the second reference signal to the network node based on the obtained access information.

The access information may comprise information indicating whether the network node allows or supports provision of additional information during access procedure.

The apparatus may be caused to perform selecting the first reference signal based on a signal measurement condition and

The apparatus may be caused to perform selecting the second reference signal based on the signal measurement condition and an offset from the signal measurement condition.

The apparatus may be caused to perform selecting the second reference signal based on the suitability for of at least one of receiving simultaneously or transmitting simultaneously, reference signal resources which are suitable for simultaneous uplink transmission, reference signal resources for uplink transmission, reference signal resources for downlink and uplink using the indicated reference signal resource as spatial relation for the uplink transmission and means for indicating the suitability to the network.

The apparatus may be caused to perform monitoring for the indication to confirm support using at least one of the first reference signal and the second reference signal as a reference.

The indication to confirm support may be comprised in a downlink control information message or in a downlink control message in random access response on both reference signals used as reference for receiving the indication.

The first reference signal and the second reference signal may each comprise at least one of a synchronization signal, demodulation reference signal, a channel state information reference signal or physical broadcast channel block.

A user equipment may comprise the apparatus of the seventh aspect.

In an eighth aspect there is provided a computer readable medium comprising instructions which, when executed by an apparatus, cause the apparatus to perform at least the following receiving, from a user equipment at the network node during a random access procedure, information relating to a first reference signal and information relating to a second reference signal for performing at least one of simultaneous downlink reception or simultaneous uplink transmission at the user equipment and providing an indication from the network node to the user equipment to confirm support of the at least one of simultaneous downlink reception or simultaneous uplink transmission at the user equipment.

An access node may comprise the apparatus of the eighth aspect.

In a ninth aspect there is provided an apparatus comprising means for receiving a plurality of reference signals from a network node, means for determining a first reference signal from the plurality of reference signals based on a first signal condition, means for determining a second reference signal from the plurality of reference signals based on a second signal condition, wherein the second signal condition is dependent on the first signal condition and means for providing, from the apparatus to the network node during a random access procedure, information relating to the first reference signal and information relating to the second reference signal for performing at least one of simultaneous downlink reception or simultaneous uplink transmission at the user equipment.

The first reference signal and the second reference signal may each comprise at least one of a synchronization signal, demodulation reference signal, channel state information reference signal or physical broadcast channel block.

The first signal condition may comprise a first reference signal received power threshold and the second signal condition may comprise a second reference signal received power threshold offset from the first reference signal received power threshold.

The apparatus may comprise means for determining the first reference signal for a first antenna configuration and determining the second reference signal for a second antenna configuration wherein at least one of downlink reception or uplink transmission can be performed at the user equipment using the first antenna configuration and the second antenna configuration simultaneously.

The first antenna configuration may comprise a first antenna panel configuration and the second antenna configuration may comprise a second antenna panel configuration.

The first antenna configuration may comprise a first beam configuration and the second antenna configuration may comprise a second beam configuration.

The apparatus may comprise means for determining the second reference signal further based on at least one of the following: antenna panel power output and pathloss towards the network node.

The apparatus may comprise means for receiving an indication of N sets of reference signals and means for selecting the first reference signal from a first set of the N sets and the second reference signal from a second set of the N sets, wherein the first set and the second set are different.

Information relating to a first reference signal and information relating to a second reference signal may comprise at least one of: an indication of reference signal resources suitable for both simultaneous downlink reception and transmission; reference signal resources suitable for simultaneous uplink transmission; reference signal resources suitable for uplink transmission or reference signal resources suitable for downlink and uplink transmission.

The apparatus may comprise means for providing the information relating to the first reference signal and the information relating to the second reference signal in at least one message during the random access procedure, wherein the message includes at least one of: a random access preamble, a message 3 of the random access procedure or a message A.

The apparatus may comprise means for providing the information relating to the first reference signal in a random access preamble and the information relating to the second reference signal in message 3 of the random access procedure or message A of the random access procedure.

The information relating to the second reference signal may comprise an indication of a time location index of the second reference signal or an indication of logical index of the second reference signal or a resource indicator of the second reference signal.

A user equipment may comprise the apparatus of the ninth aspect.

In a tenth aspect there is provided a method comprising, at an apparatus, receiving a plurality of reference signals from a network node, determining a first reference signal from the plurality of reference signals based on a first signal condition, determining a second reference signal from the plurality of reference signals based on a second signal condition, wherein the second signal condition is dependent on the first signal condition and providing, from the apparatus to the network node during a random access procedure, information relating to the first reference signal and information relating to the second reference signal for performing at least one of simultaneous downlink reception or simultaneous uplink transmission at the user equipment.

The first reference signal and the second reference signal may each comprise at least one of a synchronization signal, demodulation reference signal, channel state information reference signal or physical broadcast channel block.

The first signal condition may comprise a first reference signal received power threshold and the second signal condition may comprise a second reference signal received power threshold offset from the first reference signal received power threshold.

The method may comprise determining the first reference signal for a first antenna configuration and determining the second reference signal for a second antenna configuration wherein at least one of downlink reception or uplink transmission can be performed at the user equipment using the first antenna configuration and the second antenna configuration simultaneously.

The first antenna configuration may comprise a first antenna panel configuration and the second antenna configuration may comprise a second antenna panel configuration.

The first antenna configuration may comprise a first beam configuration and the second antenna configuration may comprise a second beam configuration.

The method may comprise determining the second reference signal further based on at least one of the following: antenna panel power output and pathloss towards the network node.

The method may comprise receiving an indication of N sets of reference signals and selecting the first reference signal from a first set of the N sets and the second reference signal from a second set of the N sets, wherein the first set and the second set are different.

Information relating to a first reference signal and information relating to a second reference signal may comprise at least one of: an indication of reference signal resources suitable for both simultaneous downlink reception and transmission; reference signal resources suitable for simultaneous uplink transmission; reference signal resources suitable for uplink transmission or reference signal resources suitable for downlink and uplink transmission.

The method may comprise providing the information relating to the first reference signal and the information relating to the second reference signal in at least one message during the random access procedure, wherein the message includes at least one of: a random access preamble, a message 3 of the random access procedure or a message A of the random access procedure.

The method may comprise providing the information relating to the first reference signal in a random access preamble and the information relating to the second reference signal in message 3 of the random access procedure or message A of the random access procedure.

The information relating to the second reference signal may comprise an indication of a time location index of the second reference signal or an indication of logical index of the second reference signal or a resource indicator of the second reference signal.

In an eleventh aspect there is provided an apparatus comprising at least one processor, and at least one memory storing instructions which, when executed by the processor, cause the apparatus at least to receive a plurality of reference signals from a network node, determine a first reference signal from the plurality of reference signals based on a first signal condition, determine a second reference signal from the plurality of reference signals based on a second signal condition, wherein the second signal condition is dependent on the first signal condition; and provide, from the apparatus to the network node during a random access procedure, information relating to the first reference signal and information relating to the second reference signal for performing at least one of simultaneous downlink reception or simultaneous uplink transmission at the user equipment.

The first reference signal and the second reference signal may each comprises at least one of a synchronization signal, demodulation reference signal, channel state information reference signal or physical broadcast channel block.

The first signal condition may comprise a first reference signal received power threshold and the second signal condition may comprise a second reference signal received power threshold offset from the first reference signal received power threshold.

The apparatus may be caused to determine the first reference signal for a first antenna configuration and determining the second reference signal for a second antenna configuration wherein at least one of downlink reception or uplink transmission can be performed at the user equipment using the first antenna configuration and the second antenna configuration simultaneously.

The first antenna configuration may comprise a first antenna panel configuration and the second antenna configuration may comprise a second antenna panel configuration.

The first antenna configuration may comprise a first beam configuration and the second antenna configuration may comprise a second beam configuration.

The apparatus may be caused to determine the second reference signal further based on at least one of the following: antenna panel power output and pathloss towards the network node.

The apparatus may be caused to receive an indication of N sets of reference signals and select the first reference signal from a first set of the N sets and the second reference signal from a second set of the N sets, wherein the first set and the second set are different.

Information relating to a first reference signal and information relating to a second reference signal may comprise at least one of: an indication of reference signal resources suitable for both simultaneous downlink reception and transmission; reference signal resources suitable for simultaneous uplink transmission; reference signal resources suitable for uplink transmission or reference signal resources suitable for downlink and uplink transmission.

The apparatus may be caused to provide the information relating to the first reference signal and the information relating to the second reference signal in at least one message during the random access procedure, wherein the message includes at least one of: a random access preamble, a message 3 of the random access procedure or a message A of the random access procedure.

The apparatus may be caused to provide the information relating to the first reference signal in a random access preamble and the information relating to the second reference signal in message 3 of the random access procedure or message A of the random access procedure.

The information relating to the second reference signal may comprise an indication of a time location index of the second reference signal or an indication of logical index of the second reference signal or a resource indicator of the second reference signal.

In a twelfth aspect there is provided a computer readable medium comprising instructions which, when executed by an apparatus, cause the apparatus to perform at least the following receiving a plurality of reference signals from a network node, determining a first reference signal from the plurality of reference signals based on a first signal condition, determining a second reference signal from the plurality of reference signals based on a second signal condition, wherein the second signal condition is dependent on the first signal condition and providing, from the apparatus to the network node during a random access procedure, information relating to the first reference signal and information relating to the second reference signal for performing at least one of simultaneous downlink reception or simultaneous uplink transmission at the user equipment.

The first reference signal and the second reference signal may each comprise at least one of a synchronization signal, demodulation reference signal, channel state information reference signal or physical broadcast channel block.

The first signal condition may comprise a first reference signal received power threshold and the second signal condition may comprise a second reference signal received power threshold offset from the first reference signal received power threshold.

The apparatus may be caused to perform determining the first reference signal for a first antenna configuration and determining the second reference signal for a second antenna configuration wherein at least one of downlink reception or uplink transmission can be performed at the user equipment using the first antenna configuration and the second antenna configuration simultaneously.

The first antenna configuration may comprise a first antenna panel configuration and the second antenna configuration may comprise a second antenna panel configuration.

The first antenna configuration may comprise a first beam configuration and the second antenna configuration may comprise a second beam configuration.

The apparatus may be caused to perform determining the second reference signal further based on at least one of the following: antenna panel power output and pathloss towards the network node.

The apparatus may be caused to perform receiving an indication of N sets of reference signals and selecting the first reference signal from a first set of the N sets and the second reference signal from a second set of the N sets, wherein the first set and the second set are different.

Information relating to a first reference signal and information relating to a second reference signal may comprise at least one of: an indication of reference signal resources suitable for both simultaneous downlink reception and transmission; reference signal resources suitable for simultaneous uplink transmission; reference signal resources suitable for uplink transmission or reference signal resources suitable for downlink and uplink transmission.

The apparatus may be caused to perform providing the information relating to the first reference signal and the information relating to the second reference signal in at least one message during the random access procedure, wherein the message includes at least one of: a random access preamble, a message 3 of the random access procedure or a message A of the random access procedure.

The apparatus may be caused to perform providing the information relating to the first reference signal in a random access preamble and the information relating to the second reference signal in message 3 of the random access procedure or message A of the random access procedure.

The information relating to the second reference signal may comprise an indication of a time location index of the second reference signal or an indication of logical index of the second reference signal or a resource indicator of the second reference signal.

In an aspect there is provided a non-transitory computer readable medium comprising program instructions for causing an apparatus to perform at least the method according to the aspects above.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
Figure 1 shows a schematic diagram of an example 5GS communication system;
Figure 2 shows a schematic diagram of an example mobile communication device;
Figure 3 shows a schematic diagram of an example control apparatus;
Figure 4a shows a signalling diagram of an example 4-step RACH procedure;
Figure 4b shows a signalling diagram of n example 2-step RACH procedure;
Figure 5 shows a flowchart of a method according to an example embodiment;
Figure 6 shows a flowchart of a method according to an example embodiment;
Figure 7 shows a partial signalling flow of a RACH procedure according to an example embodiment;
Figure 8 shows a flowchart of a method according to an example embodiment.

### Detailed description

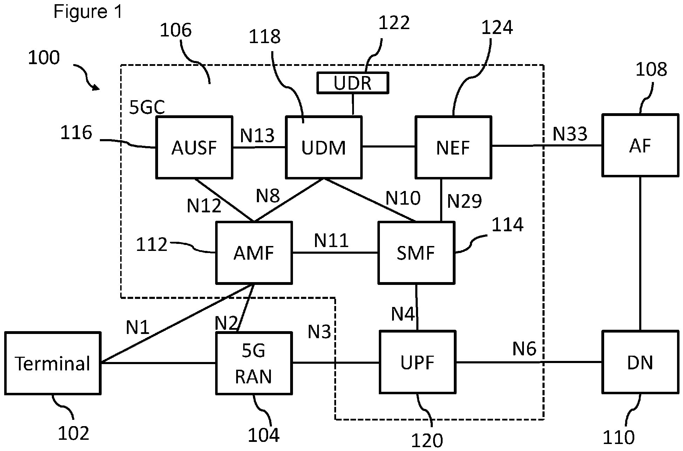

Before explaining in detail the examples, certain general principles of a wireless communication system and mobile communication devices are briefly explained with reference to Figure 1, Figure 2 and Figure 3 to assist in understanding the technology underlying the described examples.

An example of a suitable communications system is the 5G or NR concept. Network architecture in NR may be similar to that of LTE-advanced. Base stations of NR systems may be known as next generation NodeBs (gNBs). Changes to the network architecture may depend on the need to support various radio technologies and finer Quality of Service (QoS) support, and some on-demand requirements for e.g. QoS levels to support Quality of Experience (QoE) for a user. Also network aware services and applications, and service and application aware networks may bring changes to the architecture. Those are related to Information Centric Network (ICN) and User-Centric Content Delivery Network (UC-CDN) approaches. NR may use Multiple Input - Multiple Output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

Figure 1 shows a schematic representation of a 5G system (5GS) 100. The 5GS may comprise a user equipment (UE) 102 (which may also be referred to as a communication device or a terminal), a 5G radio access network (5GRAN) 104, a 5G core network (5GCN) 106, one or more internal or external application functions (AF) 108 and one or more data networks (DN) 110.

An example 5G core network (CN) comprises functional entities. The 5GCN 106 may comprise one or more Access and mobility Management Functions (AMF) 112, one or more session management functions (SMF) 114, an authentication server function (AUSF) 116, a Unified Data Management (UDM) 118, one or more user plane functions (UPF) 120, a Unified Data Repository (UDR) 122 and/or a Network Exposure Function (NEF) 124. The UPF is controlled by the SMF (Session Management Function) that receives policies from a PCF (Policy Control Function).

The CN is connected to a UE via the Radio Access Network (RAN). The 5GRAN may comprise one or more gNodeB (gNB) Distributed Unit (DU) functions connected to one or more gNodeB (gNB) Centralized Unit (CU) functions. The RAN may comprise one or more access nodes.

A User Plane Function (UPF) referred to as PDU Session Anchor (PSA) may be responsible for forwarding frames back and forth between the DN and the tunnels established over the 5G towards the UE(s) exchanging traffic with the DN.

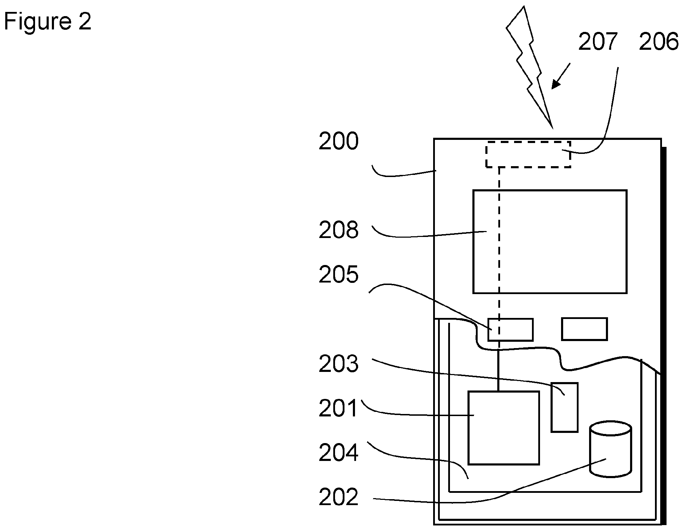

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, voice over IP (VoIP) phones, portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), smart devices, wireless customer-premises equipment (CPE), or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts, and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant components can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

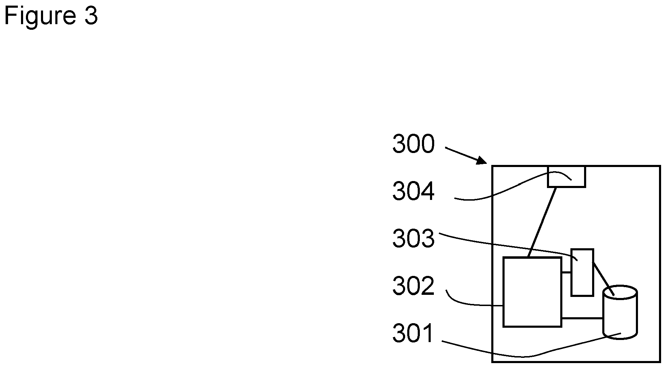

Figure 3 shows an example of a control apparatus 300 for a communication system, for example to be coupled to and/or for controlling a station of an access system, such as a RAN node, e.g. a base station, eNB or gNB, a relay node or a core network node such as an MME or Serving Gateway (S-GW) or Packet Data Network Gateway (P-GW), or a core network function such as AMF/SMF, or a server or host. The method may be implemented in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

This following relates to 3GPP physical layer design, for example, the initial access procedure (e.g., RACH) in 6G.

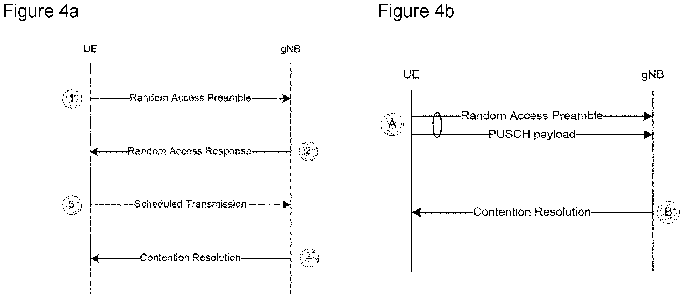

Two types of random access procedure are supported: 4-step RA type with MSG1 as illustrated in Figure 4a and 2-step RA type with MSGA as illustrated in Figure 4b. Both types of RA procedure support contention-based random access (CBRA) and contention-free random access (CFRA).

The UE selects the type of random access at initiation of the random access procedure based on network configuration. When CFRA resources are not configured, an RSRP threshold is used by the UE to select between 2-step RA type and 4-step RA type. When CFRA resources for 4-step RA type are configured, UE performs random access with 4-step RA type. When CFRA resources for 2-step RA type are configured, UE performs random access with 2-step RA type.

The network does not configure CFRA resources for 4-step and 2-step RA types at the same time for a Bandwidth Part (BWP). CFRA with 2-step RA type is only supported for handover.

The NR RA procedure (contention based random access(CBRA)) is as follows.

The MSG1 of the 4-step RA type consists of a preamble on PRACH. After MSG1 transmission, the UE monitors for a response from the network within a configured window. For CFRA, dedicated preamble for MSG1 transmission is assigned by the network and upon receiving random access response from the network, the UE ends the random access procedure.

For CBRA, upon reception of the random access response, the UE sends MSG3 using the UL grant scheduled in the response and monitors contention resolution. If contention resolution is not successful after MSG3 (re)transmission(s), the UE goes back to MSG1 transmission.

The MSGA of the 2-step RA type includes a preamble on PRACH and a payload on PUSCH. After MSGA transmission, the UE monitors for a response from the network within a configured window. For CFRA, dedicated preamble and PUSCH resource are configured for MSGA transmission and upon receiving the network response, the UE ends the random access procedure.

For CBRA, if contention resolution is successful upon receiving the network response, the UE ends the random access procedure; while if fallback indication is received in MSGB, the UE performs MSG3 transmission using the UL grant scheduled in the fallback indication and monitors contention resolution as shown. If contention resolution is not successful after MSG3 (re)transmission(s), the UE goes back to MSGA transmission.

If the random access procedure with 2-step RA type is not completed after a number of MSGA transmissions, the UE can be configured to switch to CBRA with 4-step RA type.

In initial access the UE selects a DL RS (e.g. SSB) for first access.

In a cell there may be one or multiple SSBs to support beamforming for the SSB. The SSB burst is transmitted with certain periodicity in the cell. The default periodicity is 20 ms. Table 1 summarizes SSB related parameters in FR1 and FR2, and provides parameters for the 6G frequency range between 7-20 GHz (FR3).

**Table 1**

| | **FR1** | | | | **FR3** | | **FR2-1** | | **FR2-2** | | |
|---|---|---|---|---|---|---|---|---|---|---|---|
| Frequency range | 0-3 GHz | 3-6 GH z | 0-3 GH z | 3-6 GHz | **6.4-8.5, 10-15 GHz** | **6.4-8.5, 10-15 GHz** | 24-52.6 GHz | 24-52.6 GHz | 52.6-71 GHz | 52.6-71 GHz | 52.6-71 GHz |
| SSB SCS [kHz] | 15 | | 30 | | **30** | **60** | 120 | 240 | 120 | 480 | 960 |
| Max num of SSBs | 4 | 8 | 4 | 8 | **8/16** | **16/32** | 64 | 64 | 64 | 64 | 64 |
| Length of SS burst [ms] | 2 | 4 | 1 | 2 | 2/4 | 2/4 | 4 | 2 | 4 | 1 | 0,5 |

It would be useful to enable simultaneous multiple TRP operation during and/or after an initial access procedure. Such operation is not defined in 5G NR.

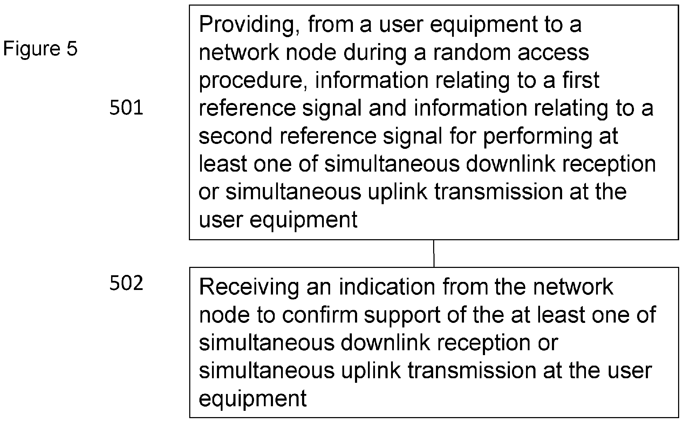

Figure 5 shows a flowchart of a method according to an example embodiment. The method may be performed at a UE, for example, as defined with reference to Figure 2.

In 501, the method comprises providing, from the user equipment to a network node during a random access procedure, information relating to a first reference signal and information relating to a second reference signal for performing at least one of simultaneous downlink reception or simultaneous uplink transmission at the user equipment.

In 502, the method comprises receiving an indication from the network node to confirm support of the at least one of simultaneous downlink reception or simultaneous uplink transmission at the user equipment.

The method may comprise, in response to receiving the indication to confirm support, performing the at least one of simultaneous downlink reception or simultaneous uplink transmission at the user equipment.

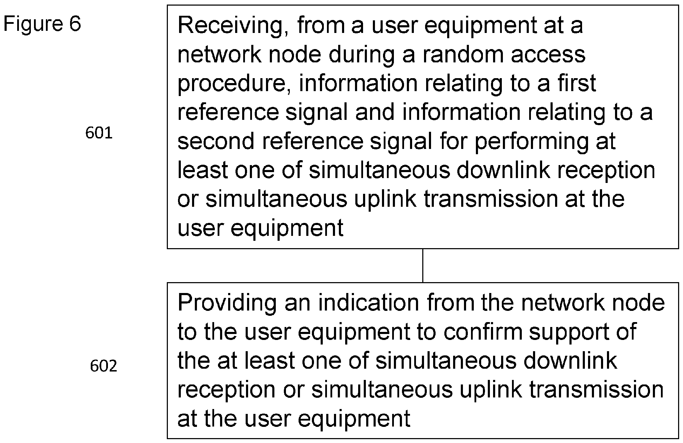

Figure 6 shows a flowchart of a method according to an example embodiment. The method may be performed at a network node, e.g., an access node such as, for example, a gNB.

In 601, the method comprises receiving, from a user equipment at the network node during a random access procedure, information relating to a first reference signal and information relating to a second reference signal for performing at least one of simultaneous downlink reception or simultaneous uplink transmission at the user equipment.

In 602, the method comprises providing an indication from the network node to the user equipment to confirm support of the at least one of simultaneous downlink reception or simultaneous uplink transmission at the user equipment.

The first reference signal may comprise at least one of a synchronization signal, demodulation reference signal, channel state information reference signal or physical broadcast channel block. The second reference signal may comprise at least one of a synchronization signal, demodulation reference signal, channel state information reference signal and or physical broadcast channel block. The first reference signal may be defined as the RS that is selected for PRACH preamble selection.

In any of the examples herein, the first (and/or second) reference signal may refer to downlink reference signal. As an example, the downlink reference signal may refer to SSB or CSI-RS. For example, the first reference signal may be a first SSB (also referred to as a primary SSB) and the second reference signal may be a second SSB (also referred to as an additional SSB).

Information relating to a first reference signal and information relating to a second reference signal may comprise at least one of: an indication of reference signal resources that are suitable (or can be used by the UE) for both simultaneous downlink reception and transmission; reference signal resources capable for simultaneous uplink transmission; reference signal resources suitable for simultaneous downlink reception; reference signal resources suitable for uplink transmission or reference signal resources suitable for downlink and uplink transmission. As an example, reference signal resources being suitable for (simultaneous) transmission or reception may refer reference signals may be used as reference for transmission and/or reception. As an example, reference signal resources being suitable for (simultaneous) transmission or reception may refer the UE is capable of transmission and/or reception using the reference signals as reference. In other words, the UE may indicate capability or ability or suitability of (simultaneously) transmitting/receiving signals/channels (e.g. PDSCH/PDCCH/PUCCH/PUSCH) associated with first and second reference signals.

In some examples, using a reference signal as reference for transmission may refer receiving/transmitting one or more signals/channels (or the DMRS ports of the channel) that have with similar characteristics or a (downlink) reference signal is used as a reference for uplink transmission (PUCCH/PUSCH and/or the DMRS of the PUCCH/PUSCH). In some examples the characteristics may refer to QCL relationship (expressed with different types). The quasi co-location type may be one of the following values:
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

In an example embodiment, information relating to a first reference signal and information relating to a second reference signal (also referred to herein as additional information) may comprise at least one of the following: SSB resources for both simultaneous downlink reception and transmission, SSB resources only for simultaneous uplink transmission (i.e. STxMP, simultaneous transmission, multipanel), SSB resource only for uplink transmission (no simultaneous uplink), SSB resource only for downlink and uplink transmission (no simultaneous).

The additional information, e.g., information relating to a first reference signal and information relating to a second reference signal such as an indicated set of reference signals, may allow the UE to indicate to the network that it is able perform simultaneous reception and/or transmission (e.g., simultaneous transmission across multiple panels (STxMP)) of DL or UL signals and channels (e.g. mTRP operation with simultaneous transmission and or reception) using the reference signals as reference (e.g., qcl reference).

The additional information may allow the UE to indicate capability for simultaneous transmission/reception as part of the random access procedure.

The method described with reference to Figure 5 may comprise selecting the second reference signal based on the suitability (or usability or the UE capability) for of at least one of receiving simultaneously or transmitting simultaneously, reference signal resources which are suitable (or usable) for simultaneous uplink transmission, reference signal resources which are suitable (or usable) for simultaneous downlink reception, reference signal resources for uplink transmission, reference signal resources for downlink reception, and uplink transmission. For the uplink transmission the indicated reference signal resource may be used as a spatial relation reference signal.. The method may further comprise of means for indicating the capability/suitability/usability to the network.

In an example embodiment, the UE selects first and second SSB resources to be indicated to the network. The UE is configured to select SSB resources (one that is selected for PRACH preamble selection and the other that is additional) for which it is capable for receiving simultaneously and/or or transmitting simultaneously or (SSB) downlink reference signal resources for which it isare capable only for simultaneous uplink transmission or SSB resource only for uplink transmission, or SSB resource only for downlink and uplink (no simultaneous)) using the indicated SSB as spatial relation for the uplink transmission.

The provisioned additional information provisioned may be subject to additional information provided by a network node. For example, whether the UE is allowed to provide the additional information to the network may be conditioned on provision of access information.

A method as described with reference to Figure 5 may comprise obtaining access information from the network node and determining to provide the information relating to the first reference signal and the information relating to the second reference signal to the network node based on the obtained access information. The access information may be provided by the network node in system information or dedicated signalling.

The access information may comprise, e.g. RACH resources or an indication of information that can be signalled by the UE during the RACH procedure.

In an example embodiment, a UE reads system information to obtain access information for a cell or receives configuration of access information in dedicated manner to determine whether it may provide additional information to network.

The access information may comprise information indicating whether the network node allows or supports provision of additional information during access procedure. The UE may determine that it can provide additional information (e.g., first and second DL RS resources) based on the access information.

In one example embodiment, the access information may comprise the RACH configuration. In this example embodiment, the RACH configuration provided by the network provides an indication whether the cell allows or supports provision of additional information during access procedure (e.g. mTRP related information).

The RACH configuration may be provided using SI broadcast or dedicated signaling. The RACH configuration may indicate support using following mechanisms. The RACH configuration may provide an association between first and second reference signals (e.g. SSB index) and a further association with a PRACH preamble. As an example, the SSB#k and SSB#j may be associated with each other (a group) and further associated with PRACH preamble index X. The reception of the PRACH preamble X by the network indicates that the UE transmitting the preamble can receive the associated SSB#k and SSB#j simultaneously.

In one example embodiment, the transmission of additional information may be triggered by a PDCCH order, the PDCCH order may comprise of one field indicating to the UE that it should perform PDCCH ordered RACH (CBRA) procedure and selection and signaling of additional SSB according to the embodiments herein.

The procedure may be applicable for 2-step and 4-step RACH.

For example, the information relating to the first reference signal and the information relating to the second reference signal may be provided in at least one message during the random access procedure, wherein the message includes at least one of: a random access preamble, a message 3 or a message A.

In an example embodiment, the additional information is provisioned using at least one message (msg.3 or msg.A) during the cell access (RACH).

The information relating to the first reference signal may be provided in a random access preamble and the information relating to the second reference signal in message 3 or message A.

For example, as described above, there may be a preamble association with additional information (e.g., first and second SSB resources may be associated with PRACH preamble(s)). In this option, a PRACH preamble (or set of preambles) is associated with first and second reference signals, that is preamble transmission indicates both reference signals.

In one alternative embodiment, the UE selects the preamble associated with the first reference signal so that the preamble indicates the first reference signal and that further information on the second reference signal will be present as part of the RA procedure.

For example, the UE may select the PRACH preamble corresponding to the first reference signal and transmits the information relating to the second reference signal to the network in msg.3 or msg A.

In an example embodiment, the UE is configured to indicate in the msg.3 or msg. A if the selected reference signal for RACH procedure (e.g., the first reference signal) and the additionally signalled reference signal can be used for simultaneous DL reception, simultaneous UL transmission or both. In one example embodiment, the msg. 3 or msg. A may comprise a field indicating the usability of first and second reference signals. In one example embodiment, the first value of the indication indicates that the second reference signal can be used for DL only, the second value may indicate that the second reference signal be used for both UL and DL. Alternatively, the second value may indicate that the second reference signal can be used for UL only.

In one example embodiment, the indication of the presence of additional information in msg.3 or msg. A may be carried in a bitfield. If the bitfield (indicates or) is set to the first value the UE indicates the signaling of the additional reference signal as part of the msg.3 or msg. A. If the bitfield (indicates or) is set to second value, no additional information e.g. SSB index, (for simultaneous TX/RX operation or multiple TRP operation) is present in msg.3 or msg. A.

The information relating to the second reference signal may comprise an indication of a time location index of the second reference signal (e.g. SSB time location index) or an indication of logical index (such as resource identifier) of the second reference signal.

In one embodiment, the provision of additional SSB may be as follows. In one example, the presence of an additional SSB (index) may be indicated by a bitfield. The SSB identifier signaled in the uplink message may correspond to the time location index of the SSBs transmitted in the cell. The SSB identifier signaled in the uplink message may correspond to the logical index of actually transmitted SSBs in the cell.

The method as described with reference to Figure 5 may comprise monitoring for the indication to confirm support using at least one of the first reference signal and the second reference signal as a reference.

The indication to confirm support may be comprised in a downlink control information message or in a downlink control message in random access response on both reference signals used as reference for receiving the indication.

In one example embodiment the UE may monitor the random access response on both SSBs. Alternatively it may monitor RAR on only one of the SSBs. The UE may receive network confirmation of first and second SSB indication in the msg.4 or msg. B, e.g. via DCI.

In one example embodiment the UE may monitor the msg.4 or msg.B using the primary or additional SSB or both as QCL reference (when both, the UE may assume PDCCH-SFN transmission).

In an example embodiment, the network may confirm the UE indication using a bit field in a DCI message scheduling the msg.4 or msg. B using first or second SSB as QCL source for PDCCH.

In an example embodiment, the network may confirm the indication of first and second SSB by scheduling the msg.4 or msg. B using DCI transmitted using both first and second SSB as QCL source.

After the UE receives confirmation, it may continue to monitor PDCCH on first and second SSB as QCL source.

In one example embodiment, the UE may transmit msg.4 ACK or msg. B ACK using simultaneous transmissions. The network may confirm the use of the first and second SSB for the Msg.4 PUCCH HARQ-ACK transmission by providing indication in DCI triggering Msg.4 and Msg.4 PUCCH. The UE would transmit PUCCH using SFN transmission scheme. If confirmation is not provided, the UE does not assume simultaneous transmission operation as result of RACH procedure.

Upon completion of RA procedure where additional SSB information was provided, the UE continues to (depending on the indication) monitor PDCCH assuming both SSB as QCL source and transmit PUCCH assuming both SSB as spatial reference. This is an example of in response to receiving the indication to confirm support, performing the at least one of simultaneous downlink reception or simultaneous uplink transmission at the user equipment.

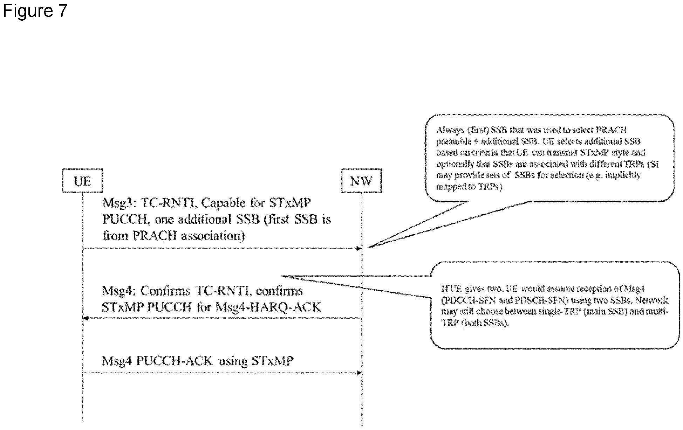

Figure 7 shows a partial signaling flow for a RACH procedure according to an example embodiment.

In 701, the UE sends a Msg3 to the network. The msg3 includes an indication that the UE is capable for STxMP PUCCH and an indication of an additional SSB. The first SSB is from PRACH preamble association. The UE selects additional SSB based on criteria that UE can transmit STxMP transmission. Optionally, the SSBs may be associated with different SSB sets (e.g. associated with different TRPs). In one example, system information,SI, (or dedicated signalig) may provide (different) sets of SSBs for selection (e.g., implicitly mapped to TRPs)).

In 702, the network confirms STxMP PUCCH for Msg4-HARQ-ACK.If UE provides two SSBs, the UE would assume reception of Msg4 (PDCCH-SFN and PDSCH-SFN) using two SSBs. Network may still choose between single-TRP (main SSB) and multi-TRP (both SSBs).

In 703, the UE provides PUCCH-ACK using STxMP.

A method as described with reference to Figure 5 may comprise selecting the first reference signal based on a signal measurement condition. The signal measurement may be RSRP, RSRQ or SNIR. The signal measurement condition may be a threshold. The second reference signal may be selected based on the signal measurement condition. The second reference signal may be (further) selected based on an offset from the signal measurement condition The signal measurement condition may be configured by network e.g. using RRC signaling.

In one example the first selected SSB has to be at least above (or equal to) a RSRP_ threshold (e.g. _ threshold for simultaneous operation). In one example, in order for the UE to be allowed to provide second SSB the first selected SSB has to be above the RSRP_threshold. In one example, the both first and second SSB may be required to be above the threshold. In one example, the both first and second SSB may be required to be within a range X dB (X may be configurable by network) for indication of the simultaneous operation as described herein. This is an example of selecting the first reference signal based on a signal measurement condition. The threshold may be signaled in the SI or through dedicated signaling. In another example, the selection may be additionally based on UE implementation.

For example, in one embodiment the UE may select a first reference signal (e.g., a primary SSB) based on RSRP measurement (and threshold). The UE may select the second reference signal (e.g., an additional SSB) based on whether the second RS RSRP level is within the range of X dB (where X may be, e.g., 3 or 6) to the additional SSB. This is an example of selecting the second reference signal based on the signal measurement condition and an offset from the signal measurement condition.

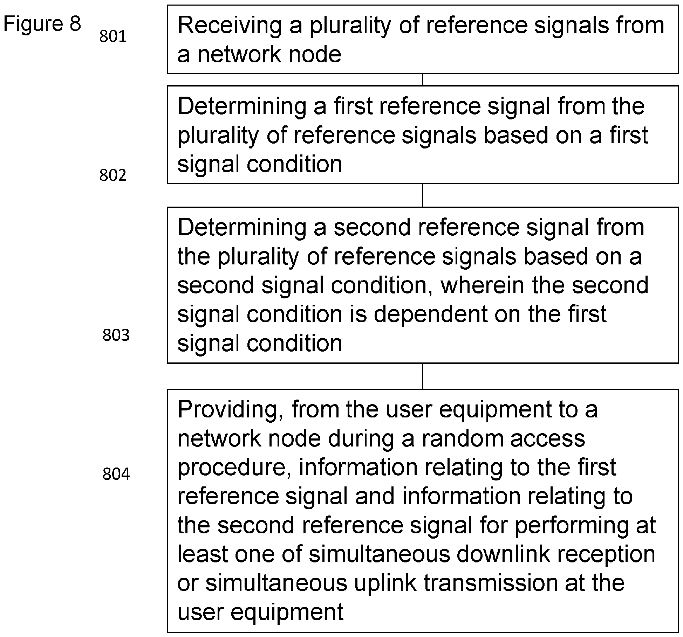

Figure 8 shows a flowchart of a method according to an example embodiment. The method may be performed at a UE.

In 801, the method comprises receiving a plurality of reference signals from a network node.

In 802, the method comprises determining a first reference signal from the plurality of reference signals based on a first signal condition.

In 803, the method comprises determining a second reference signal from the plurality of reference signals based on a second signal condition, wherein the second signal condition is dependent on the first signal condition.

In 804, the method comprises providing, from the apparatus to a network node during a random access procedure, information relating to the first reference signal and information relating to the second reference signal for performing at least one of simultaneous downlink reception or simultaneous uplink transmission at the user equipment.

The first signal condition may comprise a first reference signal received power threshold and the second signal condition may comprise a second reference signal received power threshold or a second reference signal received power threshold offset from the first reference signal received power threshold.

The method described with reference to Figure 8 may comprise determining the first reference signal for a first antenna configuration and determining the second reference signal for a second antenna configuration wherein at least one of downlink reception or uplink transmission can be performed at the user equipment using the first antenna configuration and the second antenna configuration simultaneously.

In one example embodiment, the UE selects the primary SSB based on RSRP measurement using a first antenna configuration and determines whether the additional SSB RSRP level is within the range of X dB to the additional SSB using second antenna configuration, wherein the reception of downlink signal/channel using first and second configuration can be performed simultaneously.

In one example embodiment, the UE selects the primary SSB based on RSRP measurement using a first antenna configuration and determines whether the additional SSB RSRP level is within the range of X dB to the additional SSB using a second antenna configuration, wherein the transmission of uplink signal/channel using the first antenna configuration and the second antenna configuration can be performed simultaneously.

One antenna panel (e.g. a secondary panel) used for selection may be able to produce X dB less power for UL transmission than another antenna panel (e.g. the primary panel).

The method described with reference to Figure 8 may comprise determining the second reference signal further based on at least one of the following: antenna panel power output and pathloss towards the network node.

In one example embodiment, the UE selects the additional SSB so that it takes into account internal losses what comes to the EIRP/Tx Power the UE can generate per antenna or antenna panel, and also the pathloss towards the gNB so that the received powers at the gNB side would be within Y dB window.

The first antenna configuration may comprise a first antenna panel configuration. The second antenna configuration may comprise a second antenna panel configuration.

The first antenna configuration may comprise a first beam configuration. The second antenna configuration may comprise a second beam configuration.

For example, antenna configuration may refer to the UE's antenna panel or panels used for simultaneous uplink transmission (e.g. in connected mode), antenna panel or panels used for simultaneous downlink reception (e.g. in connected mode), beam or beams formed by one or more antennas used for simultaneous uplink transmission (e.g. in connected mode) and/or beam or beams formed by one or more antennas used for simultaneous downlink reception (e.g. in connected mode).

A method as described with reference to Figure 8 may comprise receiving an indication of N sets of reference signals and means for selecting the first reference from a first set of the N sets and the second reference signal from a second set of the N sets, wherein the first set and the second set are different.

In one example embodiment, the network may provide in the system information N sets of reference signals. If the UE determines that N sets of reference signals are present in the system information the UE is configured to select reference signals from different sets. Otherwise, the UE selects based on the methods herein from all the reference signals of the cell.

Methods as described above with reference to Figures 5 to 8 may enable enhanced uplink coverage for initial access (for example, when a UE equipped with antenna panel specific power amplifiers). The methods may enable multi-TRP connectivity during initial access (not just in connected mode operation as in legacy).

An apparatus may comprise means for providing, from a user equipment to a network node during a random access procedure, information relating to a first reference signal and information relating to a second reference signal for performing at least one of simultaneous downlink reception or simultaneous uplink transmission at the user equipment and means for receiving an indication from the network node to confirm support of the at least one of simultaneous downlink reception or simultaneous uplink transmission at the user equipment.

The apparatus may comprise a user equipment, such as a mobile phone, be the user equipment, or be comprised in the user equipment or a chipset for performing at least some actions of/for the user equipment.

An apparatus may comprise means for receiving, from a user equipment at the network node during a random access procedure, information relating to a first reference signal and information relating to a second reference signal for performing at least one of simultaneous downlink reception or simultaneous uplink transmission at the user equipment and means for providing an indication from the network node to the user equipment to confirm support of the at least one of simultaneous downlink reception or simultaneous uplink transmission at the user equipment.

The apparatus may comprise an access node, such as a gNB, be the access node, or be comprised in the access node or a chipset for performing at least some actions of/for the access node.

An apparatus may comprise means for receiving a plurality of reference signals from a network node, means for determining a first reference signal from the plurality of reference signals based on a first signal condition, means for determining a second reference signal from the plurality of reference signals based on a second signal condition, wherein the second signal condition is dependent on the first signal condition and means for providing, from the apparatus to the network node during a random access procedure, information relating to the first reference signal and information relating to the second reference signal for performing at least one of simultaneous downlink reception or simultaneous uplink transmission at the user equipment.

The apparatus may comprise a user equipment, such as a mobile phone, be the user equipment, or be comprised in the user equipment or a chipset for performing at least some actions of/for the user equipment.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems such as 6G networks or 5G-Advanced networks. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
I hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. A apparatus comprising:
means for providing, from a user equipment to a network node during a random access procedure, information relating to a first reference signal and information relating to a second reference signal for performing at least one of simultaneous downlink reception or simultaneous uplink transmission at the user equipment; and
means for receiving an indication from the network node to confirm support of the at least one of simultaneous downlink reception or simultaneous uplink transmission at the user equipment.

2. The apparatus according to claim 1, comprising means for, in response to receiving the indication to confirm support, performing the at least one of simultaneous downlink reception or simultaneous uplink transmission at the user equipment.

3. The apparatus according to claim 1 or claim 2, wherein information relating to a first reference signal and information relating to a second reference signal comprises at least one of: an indication of reference signal resources suitable for both simultaneous downlink reception and transmission; reference signal resources suitable for simultaneous uplink transmission; reference signal resources suitable for uplink transmission or reference signal resources suitable for downlink and uplink transmission.

4. The apparatus according to any of claims 1 to 3, comprising means for providing the information relating to the first reference signal and the information relating to the second reference signal in at least one message during the random access procedure, wherein the message includes at least one of: a random access preamble, a message 3 of the random access procedure or a message A of the random access procedure.

5. The apparatus according to claim 4, comprising means for providing the information relating to the first reference signal in a random access preamble and the information relating to the second reference signal in message 3 of the random access procedure or message A of the random access procedure.

6. The apparatus according to claim 4 or claim 5, wherein the information relating to the second reference signal comprises an indication of a time location index of the second reference signal or an indication of logical index of the second reference signal or a resource indicator of the second reference signal.

7. The apparatus according to any of claims 1 to 6, comprising means for obtaining access information from the network node in system information or dedicated signaling and means for determining to provide the information relating to the first reference signal and the information relating to the second reference signal to the network node based on the obtained access information.

8. The apparatus according to any of claims 1 to 7, comprising means for selecting the first reference signal based on a signal measurement condition and
means for selecting the second reference signal based on the signal measurement condition and an offset from the signal measurement condition.

9. The apparatus according to any of claims 1 to 8, comprising means for monitoring for the indication to confirm support using at least one of the first reference signal and the second reference signal as a reference.

10. The apparatus according to any of claims 1 to 9, wherein the first reference signal and the second reference signal each comprises at least one of a synchronization signal, demodulation reference signal, a channel state information reference signal or physical broadcast channel block.

11. An apparatus comprising:
means for receiving, from a user equipment at the network node during a random access procedure, information relating to a first reference signal and information relating to a second reference signal for performing at least one of simultaneous downlink reception or simultaneous uplink transmission at the user equipment; and
means for providing an indication from the network node to the user equipment to confirm support of the at least one of simultaneous downlink reception or simultaneous uplink transmission at the user equipment.

12. A method comprising:
providing, from a user equipment to a network node during a random access procedure, information relating to a first reference signal and information relating to a second reference signal for performing at least one of simultaneous downlink reception or simultaneous uplink transmission at the user equipment; and
receiving an indication from the network node to confirm support of the at least one of simultaneous downlink reception or simultaneous uplink transmission at the user equipment.

13. A method comprising:
receiving, from a user equipment at a network node during a random access procedure, information relating to a first reference signal and information relating to a second reference signal for performing at least one of simultaneous downlink reception or simultaneous uplink transmission at the user equipment; and
providing an indication from the network node to the user equipment to confirm support of the at least one of simultaneous downlink reception or simultaneous uplink transmission at the user equipment.

14. A computer readable medium comprising instructions which, when executed by an apparatus, cause the apparatus to perform at least the following:
providing, from a user equipment to a network node during a random access procedure, information relating to a first reference signal and information relating to a second reference signal for performing at least one of simultaneous downlink reception or simultaneous uplink transmission at the user equipment; and
receiving an indication from the network node to confirm support of the at least one of simultaneous downlink reception or simultaneous uplink transmission at the user equipment.

15. A computer readable medium comprising instructions which, when executed by an apparatus, cause the apparatus to perform at least the following:
receiving, from a user equipment at the network node during a random access procedure, information relating to a first reference signal and information relating to a second reference signal for performing at least one of simultaneous downlink reception or simultaneous uplink transmission at the user equipment; and
providing an indication from the network node to the user equipment to confirm support of the at least one of simultaneous downlink reception or simultaneous uplink transmission at the user equipment.
